# FASCICULE DE BREVET EUROPEEN

(11) **EP 4 011 693 B1**
(45) Date de publication et mention de la délivrance du brevet: **08.11.2023**
(21) Numéro de dépôt: 21213216.1
(22) Date de dépôt: 08.12.2021
(51) Int. Cl.: B60N 2/60, B60N 2/68, B60N 2/90

(54) **DOSSIER DE SIÈGE DE VÉHICULE**
RÜCKENLEHNE EINES FAHRZEUGSITZES
VEHICLE SEAT BACKREST

(30) Priorité: 09.12.2020 FR 2012942; 29.06.2021 FR 2106982
(43) Date de publication de la demande: 15.06.2022
(73) Titulaire: FAURECIA Sièges d'Automobile, 92000 Nanterre (FR)
(72) Inventeur: REITH, Carsten, 31712 NIEDERNWÖHREN (DE); MAUFFREY, Jean-Marie, 70290 CHAMPAGNEY (FR); DURIEZ, Didier, 91220 LE PLESSIS-PÂTÉ (FR); PRAJAPATI, Yesh, 411018 PUNE (IN); PIEDERRIERE, Jean-Yves, 91670 ANGERVILLE (FR); POULET, Etienne, 70280 SAINT BRESSON (FR); GAZANIOL, Benoît, 91290 ARPAJON (FR)
(74) Mandataire: Plasseraud IP

(56) Documents cités:
- US-A1- 2018 319 301

## Description

### Domaine technique

La présente description est relative à un dossier de siège de véhicule, notamment de véhicule automobile. Il est également décrit un siège de véhicule comprenant un tel dossier, un procédé de montage d'un dossier de siège de véhicule et d'un siège de véhicule comprenant un tel dossier. Enfin, la présente description se rapporte également à un procédé de remplacement d'une partie au moins de la garniture d'un dossier de siège de véhicule.

### Technique antérieure

Dans le domaine automobile, en particulier, il est connu de réaliser un dossier de siège de véhicule en recouvrant une armature de dossier de mousse. L'ensemble est ensuite recouvert d'une housse.

Le dossier du siège peut intégrer de nombreuses fonctions de confort et/ou de sécurité. Pour ce faire, il est connu de fixer un support à l'armature de dossier, de monter les différents éléments nécessaires à la réalisation des fonctions de confort et/ou de sécurité sur le support ou sur l'armature de dossier, puis de recouvrir l'ensemble ainsi obtenu de mousse. Une housse vient alors coiffer l'ensemble.

Ainsi en fonction du nombre et de la complexité des fonctions à intégrer dans le dossier d'un siège, le montage d'un dossier peut être très différent sur une chaîne d'assemblage.

En outre, le montage d'un tel dossier est généralement réalisé au moins en partie par un opérateur, qui doit donc être capable d'assembler les différentes variantes d'un même dossier.

Il existe donc un besoin pour un dossier de siège pouvant être monté de manière sensiblement identique quelques soient les fonctions qu'il intègre, avec un temps de montage sensiblement constant.

Par ailleurs, il existe un besoin pour un dossier de siège dont la garniture peut être aisément montée sur l'armature de dossier et démontée, si possible d'une manière permettant un remplacement aisé de la partie de la garniture retirée. Le document US 2018/319301 montre un dossier de siège de véhicule comprenant une armature de dossier et une garniture de dossier fixée sur l'armature de dossier.

### Résumé

À cette dernière fin, il est décrit un dossier de siège de véhicule comprenant :
- une armature de dossier,
- une garniture de dossier fixée sur l'armature de dossier, la garniture de dossier présentant au moins une fente, chaque fente étant adaptée à recevoir une tige de support d'appui-tête par mouvement relatif de la garniture par rapport à l'armature de dossier selon une direction longitudinale du siège de véhicule, et
- au moins un premier et un deuxième éléments de finition, chaque élément de finition formant au moins une encoche, une encoche du premier élément de finition et une encoche du deuxième élément de finition définissant un passage pour une tige de support d'appui-tête, le deuxième élément de finition recouvrant au moins partiellement, de préférence totalement, la au moins une fente dans la garniture, au moins un parmi le premier et le deuxième éléments de finition étant en contact avec la garniture, notamment avec un bloc de mousse de la garniture.

Ainsi, la garniture d'un tel dossier peut facilement et rapidement être montée sur l'armature de dossier et/ou retirée du dossier. Notamment, la garniture peut être montée depuis une face avant du dossier, éventuellement alors que la ou les tiges de support d'appui-tête est/sont déjà montée/s sur l'armature de dossier. De même, il est possible de retirer la garniture vers l'avant du dossier, sans avoir à retirer la ou les tiges de support d'appui-tête, ni de préférence l'appui-tête lui-même. Toutefois, la présence des premier et deuxième éléments de finition assurent un rendu esthétique du dossier de siège, particulièrement apprécié des utilisateurs.

Selon des modes de réalisations préférés, le dossier de siège de véhicule comprend une ou plusieurs des caractéristiques suivantes, prises seules ou en combinaison :
- chaque élément de finition forme deux encoches, telles que chaque encoche du premier élément de finition soit en regard d'une encoche respective du deuxième élément de finition pour définir un passage de section complémentaire à la section d'une tige de support d'appui-tête respective ;
- le premier élément de finition est fixé sur au moins l'un parmi la garniture, notamment un bloc de mousse de la garniture ou un support d'un bloc de mousse de la garniture, et l'armature de dossier, notamment par emboîtage élastique, et/ou
- le deuxième élément de finition est fixé sur au moins l'un parmi la garniture, notamment un bloc de mousse de la garniture ou un support d'un bloc de mousse de la garniture, l'armature de dossier et le premier élément de finition, notamment par emboîtage élastique ;
- le deuxième élément de finition est fixé uniquement sur le premier élément de finition ;
- la garniture, notamment un bloc de mousse de la garniture, a une rainure recevant un relief complémentaire du premier élément de finition, notamment une nervure du premier élément de finition ;
- la garniture, notamment un bloc de mousse de la garniture, présente un renfoncement de section complémentaire à une partie du premier élément de finition, le renfoncement étant de préférence disposé d'un côté opposé des tiges de support d'appui-tête par rapport à la rainure le cas échéant ;
- le premier élément de finition et/ou le deuxième élément de finition contraint la garniture, notamment un bloc de mousse de la garniture ;
- le premier élément de finition comporte des moyens de fixation à la garniture, notamment à un support d'un bloc de mousse de la garniture, en particulier des reliefs d'emboîtage élastique ;
- le deuxième élément de finition présente une forme de coque courbe, la courbure de la coque étant sensiblement égale à la courbure d'une partie de la garniture, notamment d'un bloc de mousse de la garniture, recouvert/e par le deuxième élément de finition ;
- le deuxième élément de finition comporte des moyens de fixation au premier élément de finition, notamment au moins un relief d'emboîtage élastique ;
- les premier et deuxième éléments de finition comportent des moyens de guidage complémentaires pour guider un déplacement relatif du deuxième éléments de finition par rapport au premier élément de finition jusqu'à une position de fixation du deuxième élément de finition, les moyens de guidage complémentaires comprenant de préférence au moins un, de préférence encore au moins deux et de manière encore plus préférée quatre couple/s d'un relief saillant sur l'un parmi le premier élément de finition et le deuxième élément de finition et d'un relief en creux adapté à recevoir le relief saillant, sur l'autre parmi le premier élément de finition et le deuxième élément de finition ;
- la garniture comprend au moins un module central de garniture, adapté à être fixé à l'armature de dossier ;
- le dossier de siège de véhicule comprend en outre deux modules latéraux de garniture disposés chacun d'un côté respectif du module central de garniture, chacun des trois modules de garniture étant de préférence adapté à être fixé à l'armature de dossier indépendamment des deux autres modules de garniture, chacun des trois modules de garniture étant, de préférence encore, fixé à l'armature de dossier indépendamment des deux autres modules de garnitures ;
- chaque module de garniture comprend une garniture indépendante de la garniture des deux autres modules de garniture ;
- le module central de garniture comprend au moins un support, fixé à l'armature de dossier, et un bloc de mousse recouvrant en tout ou partie le support, le premier et/ou le deuxième élément/s de finition étant de préférence fixé/s sur le support du module central de garniture le cas échéant ;
- chaque module latéral de garniture comprend un support sur lequel est fixé un bloc de mousse ;
- le module central de garniture et/ou au moins l'un, de préférence chacun parmi les modules latéraux de garniture comprend/nent une housse respective, chaque housse recouvrant au moins une partie du bloc de mousse respectif, le cas échéant ; et
- le dossier de siège de véhicule comprend en outre une housse commune recouvrant en tout ou partie les trois modules de garniture, notamment les blocs de mousse respectifs des trois modules de garniture, le cas échéant.

Selon un autre aspect, il est également décrit un siège de véhicule automobile comprenant une assise avec une armature d'assise et un dossier tel que décrit ci-avant dans toutes ses combinaisons, l'armature de dossier étant fixée à l'armature d'assise, de préférence de manière à pouvoir pivoter autour d'un axe transversal.

Selon encore un autre aspect, il est décrit un procédé de montage d'un dossier de siège de véhicule automobile tel que décrit ci-avant dans toutes ses combinaisons, comprenant les étapes consistant à :
- fournir une armature de dossier ;
- fournir une garniture adaptée à être fixée sur l'armature de dossier par une face avant du dossier, la garniture présentant au moins une fente débouchante, adaptée à recevoir une tige de support d'appui-tête ;
- fixer la garniture sur l'armature de dossier ;
- fixer les au moins deux éléments de finition de manière à former un passage pour chaque tige de support d'appui-tête, le deuxième élément de finition recouvrant au moins partiellement la au moins une fente.

Selon encore un autre aspect, il est décrit un procédé de fabrication d'un siège de véhicule, comprenant les étapes consistant à :
- fournir une assise avec une armature d'assise ;
- monter un dossier en mettant en oeuvre procédé de montage d'un dossier de siège de véhicule automobile tel que décrit ci-avant dans toutes ses combinaisons ; et
- fixer le dossier à l'assise, de préférence de manière que le dossier puisse pivoter autour d'un axe transversal par rapport à l'assise.

Il est encore décrit un procédé de remplacement d'une garniture d'un dossier de siège de véhicule tel que décrit ci-avant, dans toutes ses combinaisons, comprenant les étapes consistant à :
i) retirer les premier et deuxième éléments de finition ;
ii) retirer la garniture de l'armature de dossier ;
iii) fixer une autre garniture sur l'armature de dossier ; et
iv) fixer des premier et deuxième éléments de finition, les premier et deuxième éléments de finition étant de préférence les mêmes aux étapes i) et iv).

### Brève description des dessins

D'autres caractéristiques et avantages apparaîtront au cours de la description suivante d'une de ses formes de réalisation, donnée à titre d'exemple non limitatif, en regard des dessins joints. Sur les dessins :
La figure 1 représente schématiquement une vue de côté d'un exemple de siège de véhicule ;
La figure 2 représente schématiquement en perspective le dossier du siège de véhicule de la figure 1 ;
La figure 3 représente schématiquement une vue éclatée du dossier de siège de véhicule de la figure 2 ;
La figure 4 représente schématiquement en perspective l'armature du dossier de siège de véhicule des figures 2 et 3 ;
La figure 5 représente schématiquement en perspective une première face d'un support de module central de garniture mis en oeuvre dans le dossier de siège de véhicule des figures 2 et 3 ;
La figure 6 représente schématiquement en perspective la deuxième face, opposée à la première face, du support de module central de garniture de la figure 5 ;
La figure 7 représente schématiquement le support de module central de garniture des figures 5 et 6, monté sur l'armature de dossier de la figure 4 ;
La figure 8 représente schématiquement une vue en perspective du dossier de siège de véhicule des figures 2 et 3, dépourvu des blocs de mousse des différents modules de garniture ;
La figure 9 représente schématiquement une vue éclatée d'un détail du dossier de la figure 2 selon une première perspective ;
La figure 10 représente schématiquement une vue éclatée du détail du dossier de la figure 9, selon une deuxième perspective ;
La figure 11 représente schématiquement une vue éclatée du détail du dossier des figures 9 et 10, selon une troisième perspective, l'un des éléments de finition étant mis en position ;
La figure 12 représente schématiquement le détail du dossier de la figure 9, les deux éléments de finition étant mis en position ;

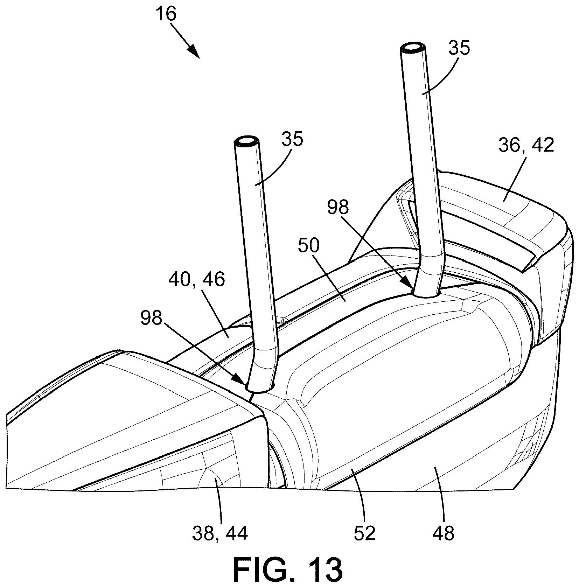

La figure 13 représente schématiquement le détail du dossier de la figure 9, selon une perspective différente de celle de la figure 12, les deux éléments de finition étant mis en position.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un siège de véhicule dans sa position normale d'utilisation.

En particulier, la direction longitudinale **X** s'entend de la direction longitudinale du siège. La direction longitudinale du siège est considérée être la même que la direction longitudinale du véhicule automobile dans lequel le siège est monté. Cette direction longitudinale **X** correspond à la direction normale d'avancement du véhicule. La direction longitudinale **X** est horizontale. La direction transversale **Y** du siège correspond ainsi à la direction transversale ou latérale du véhicule automobile. Cette direction transversale correspond à une direction perpendiculaire à la direction normale d'avancement du véhicule. La direction transversale **Y** est horizontale. Enfin, la direction verticale **Z** est une direction verticale du siège, perpendiculaire aux directions longitudinale et transversale.

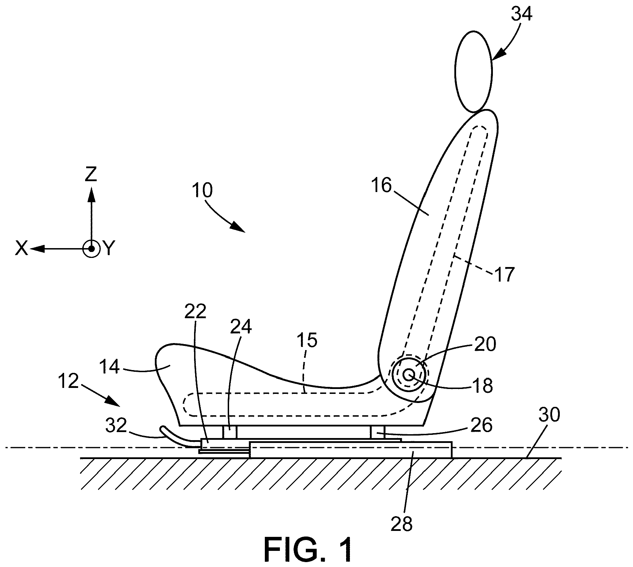

La figure 1 représente de façon schématique un siège de véhicule automobile **10** monté sur un mécanisme à glissières **12.**

Le siège **10** comporte une assise **14,** avec une armature d'assise **15,** sur laquelle un dossier **16,** avec une armature dossier **17,** est monté. L'armature de dossier **17** est ici pivotante autour d'un axe **18** transversal, par rapport à l'armature d'assise **15.** Pour ce faire, un mécanisme d'articulation **20** est disposé entre l'armature d'assise **15** et l'armature de dossier **17.**

L'assise **14** est montée sur des profilés mobiles **22,** également appelé coulisses ou profilés mâles, par l'intermédiaire de pieds **24, 26.** Chaque profilé mobile **22** fait partie d'une glissière **12** et est associé à un profilé fixe **28.** Le profilé fixe **28** est également appelé rail ou profilé femelle. Le profilé fixe **28** est fixé au plancher **30** d'un véhicule automobile.

Le siège **10** comprend dans cet exemple un élément de commande manuelle **32,** appelé palonnier, de commande en coulissement des glissières **12.** Cet élément de commande manuelle **32** permet notamment de bloquer et débloquer des systèmes d'arrêt du coulissement des profilés mobiles **22** par rapport au profilés fixes **28** respectifs. Une fois les systèmes d'arrêt débloqués, l'élément de commande manuelle **32** peut également être utilisé pour faire coulisser les profilés mobiles **22** par rapport à leurs profilés fixes **28** respectifs de la glissière **12** dans la direction longitudinale **X** des glissières **12.** Les profilés fixes **28** et mobiles **22** des glissières **12** sont généralement métalliques.

Alternativement, le déplacement des profilés mobiles **22** par rapport aux profilés fixes **28** est commandé au moyen d'un actionneur.

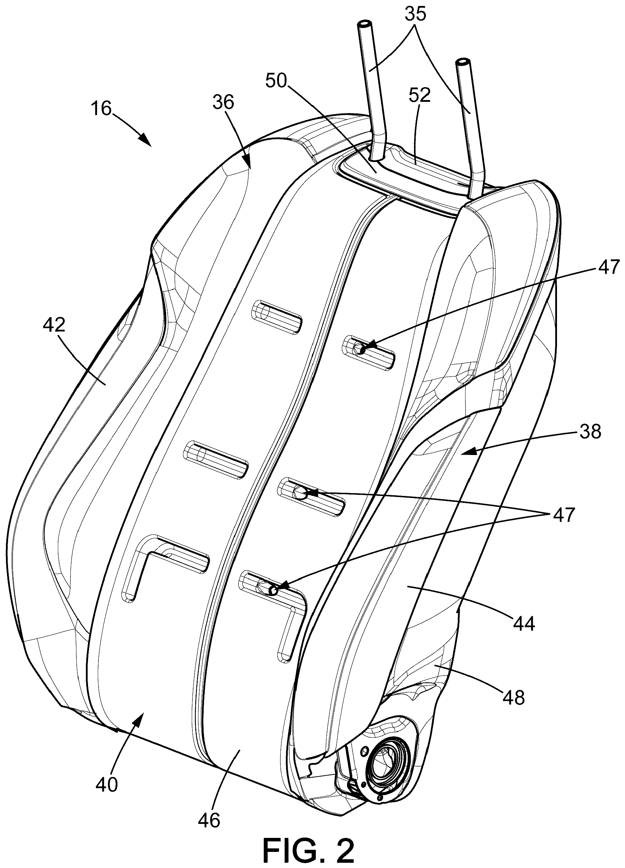

Selon l'exemple illustré, le siège **10** peut également comprendre un appui-tête **34,** avec une armature d'appui-tête **35,** partiellement visible sur la figure 2, sous la forme de tiges **35** fixées à l'armature de dossier **17.**

Dans la suite, on décrit plus en détail le dossier **16** du siège de véhicule **10.**

Comme cela est visible sur la figure 2 notamment, le dossier **16** illustré comprend essentiellement un premier module latéral de garniture **36,** un deuxième module latéral de garniture **38** et un module central de garniture **40,** tel que les premier et deuxième modules latéraux de garniture **36, 38** soient disposés chacun d'un côté respectif du module central de garniture **40.** Chaque module de garniture **36, 38, 40** comprend ici un bloc de mousse **42, 44, 46,** seul élément visible du module de garniture respectif sur la figure 2. Comme cela est notamment visible sur la figure 2, le bloc de mousse **46** du module central de garniture **40** peut comprendre des trous **47.** Ces trous **47** permettent une ventilation du dos de l'occupant du siège, comme il sera décrit ultérieurement.

Dans l'exemple illustré, le module central de garniture **40** forme la face d'appui de la cuvette du dossier **16,** c'est-à-dire la partie centrale d'appui du dos de l'occupant du siège, tandis que les modules latéraux **36, 38** forment les portions latérales en saillie par rapport à la cuvette de cette même face d'appui du dos de l'occupant du siège.

Il est à noter ici que les modules de garniture **36, 38, 40** préexistent à leur fixation sur l'armature de dossier **17.** Ainsi, ces modules de garniture **36, 38, 40** ne sont pas réalisés par surmoulage de l'armature de dossier **17** et/ou d'éléments de structure déjà solidaires de l'armature de dossier **17.** Ceci n'empêche pas que les blocs de mousse **42, 44, 46** des différents modules de garniture **36, 38, 40** peuvent être réalisés par surmoulage d'un éventuel support du module de garniture **36, 38, 40** respectif. Cependant, ce surmoulage est réalisé préalablement à la fixation du support en question sur l'armature de dossier **17.**

Le dossier **16** comprend encore une coque **48,** ci-après dite « coque arrière », définissant la plus grande partie de la face arrière du dossier **16.** Le dossier **16** comprend encore, selon l'exemple illustré, deux éléments de finition **50, 52** supérieurs. Les deux éléments de finition **50, 52** entourent les tiges **35** de support de l'appui-tête **34.** La fixation des deux éléments de finition **50, 52** sera décrite plus en détail ci-après.

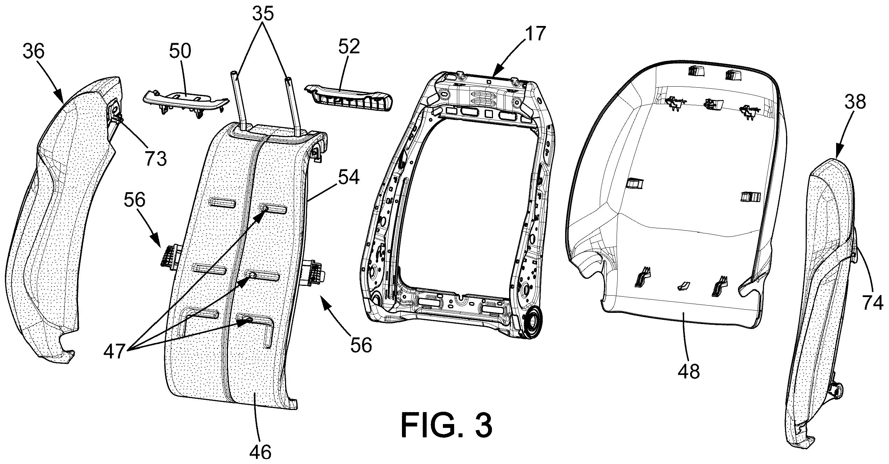

De manière remarquable ici et comme illustré schématiquement par la figure 3, chaque module de garniture **36, 38, 40** est fixé à l'armature de dossier **17,** indépendamment des deux autres modules de garniture **36, 38, 40.** En d'autres termes, chaque module de garniture **36, 38, 40** peut être fixé sur l'armature de dossier **17** alors que les deux autres modules de garniture **36, 38, 40** ne sont pas fixés sur l'armature de dossier **17.** Ainsi, chaque module de garniture **36, 38, 40** est apte à être fixé sur l'armature de dossier **17** indépendamment des deux autres modules de garniture **36, 38, 40.** Un module de garniture **36, 38, 40** peut cependant être fixé à un autre module de garniture **36, 38, 40.** Toutefois, de préférence, les modules de garniture **36, 38, 40** sont indépendants en ce qu'il n'existe pas de fixation directe d'un module de garniture **36, 38, 40** sur un autre module de garniture **36, 38, 40.** Le bloc de mousse **46** du module central de garniture **40** peut toutefois être monté serré entre les blocs de mousse **42, 44** des deux modules latéraux de garniture **36, 38.**

La coque arrière **48** peut également être directement fixée sur l'armature de dossier **17,** de préférence indépendamment des modules de garniture **36, 38, 40.** La coque arrière **48** peut être fixée à l'armature de dossier **17** par tout moyen adapté, notamment par vissage ou rivetage. Selon encore un autre exemple, la coque arrière **48** est emboîtée élastiquement sur l'armature de dossier **17.** Avantageusement, la coque arrière **48** est adaptée à être fixée sur l'armature de dossier **17** après la fixation des modules de garniture **36, 38, 40.** Ceci peut en effet permettre d'accéder par l'arrière du siège **10,** aux différents éléments des modules de garniture **36, 38, 40** devant être reliés fonctionnellement, après que les modules de garniture **36, 38, 40** ont été fixés sur l'armature de dossier **17,** avant de fixer la coque arrière **48.**

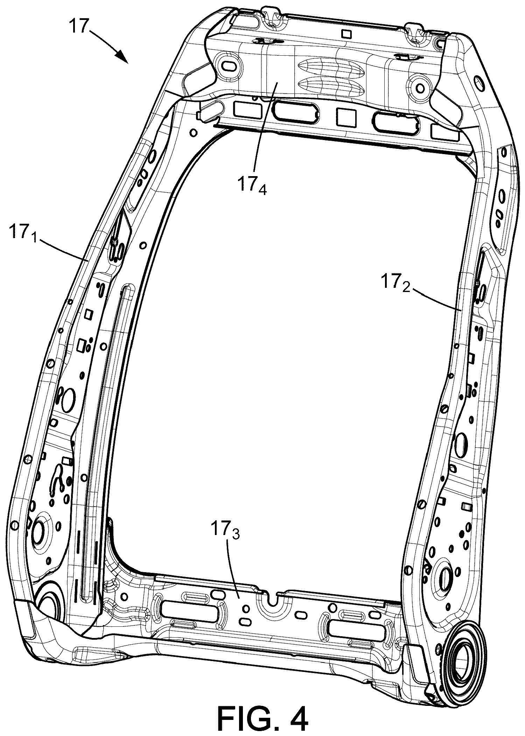

Comme illustré à la figure 4, l'armature de dossier **17** comprend essentiellement un premier montant **17₁**, un deuxième montant **17₂,** une première traverse **17₃,** ci-après dite « traverse basse **17₃** », et une deuxième traverse **17₄**, ci-après dite « traverse haute **17₄** ». Les montants **17₁**, **17₂** et les traverses **17₃**, **17₄** forment une armature de dossier **17** en forme de cadre. Pour ce faire, les montants **17₁, 17₂,** et les traverses **17₃**, **17₄** peuvent être fixées ensemble, notamment soudés ensemble. Alternativement, l'armature de dossier **17** est monobloc, celle-ci étant par exemple moulée.

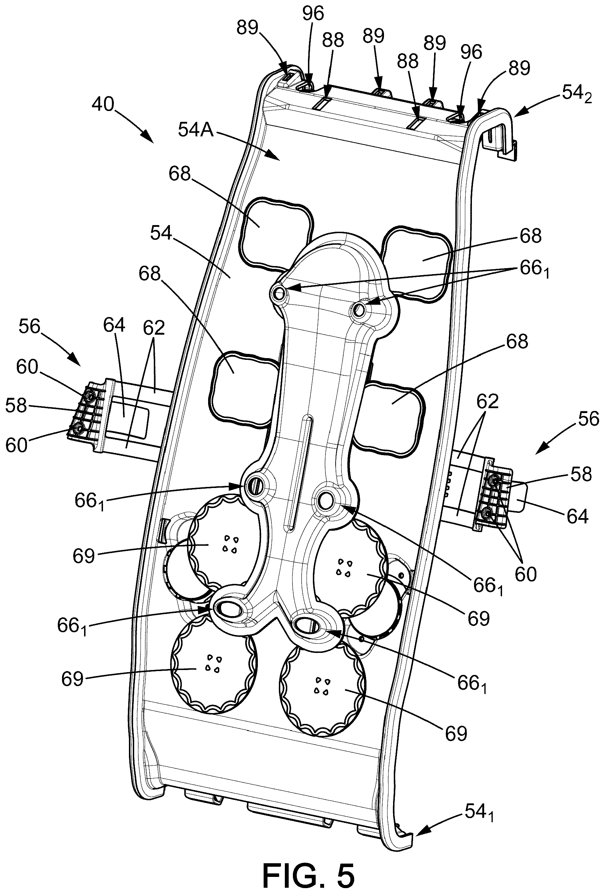

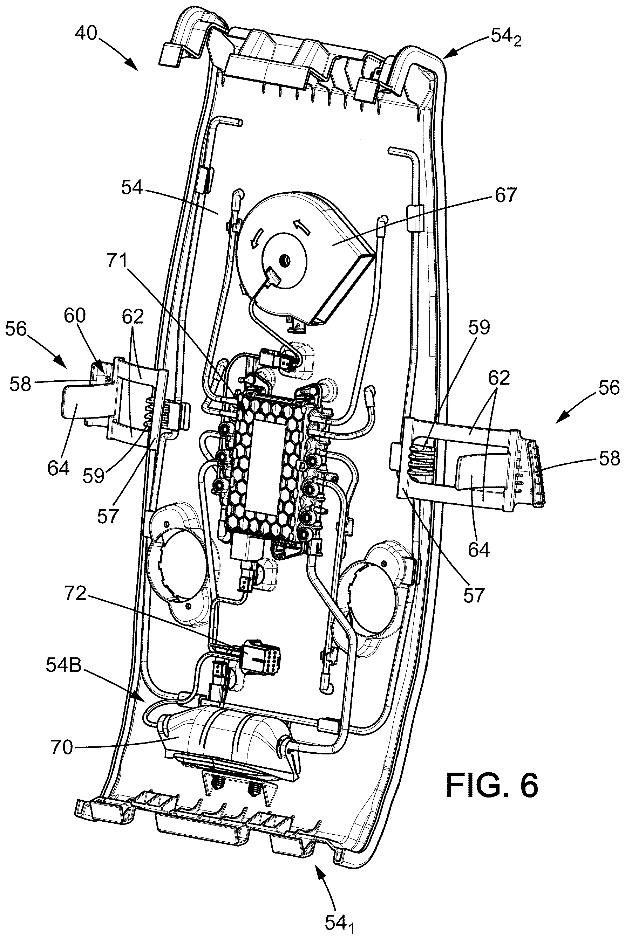

Sur l'armature de dossier **17,** est fixé le module central de garniture **40** illustré aux figures 5 et 6, respectivement en vue de face et en vue de derrière, sans le bloc de mousse **46** associé.

Sur ces figures, le module central de garniture **40** comprend essentiellement un support **54,** ici sous forme de plaque. Le support **54** est notamment plus rigide que le bloc de mousse **46** du module central de garniture **40.** Le bloc de mousse **46** du module central de garniture **40** est fixé sur le support **54.** Notamment, le bloc de mousse **46** peut être surmoulé sur le support **54.** Alternativement, le bloc de mousse **46** peut être collé ou emboité élastiquement sur le support **54,** le bloc de mousse **46** présentant de préférence des inserts en plastique dans ce dernier cas, formant des reliefs d'emboîtage élastique sur le support **54.**

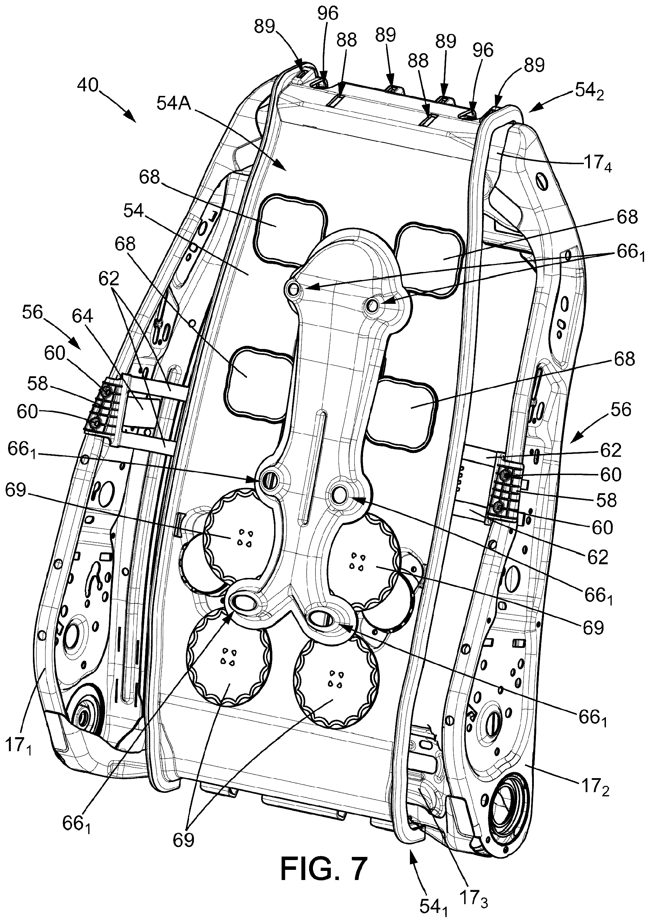

Le support **54** s'étend essentiellement selon une direction longitudinale. Les extrémités **54₁**, **54₂** longitudinales du support **54** sont ici recourbées. Ainsi, l'extrémité supérieure **54₂** du support **54** peut reposer sur la traverse haute **17₄** de l'armature de dossier **17,** comme illustré à la figure 7. De manière analogue, l'extrémité inférieure **54₁** du support **54** peut recevoir la traverse basse **17₃** de l'armature de dossier **17** comme ceci est visible sur la figure 7. Les extrémités **54₁**, **54₂** présentent ici des moyens de fixation aux traverses basse **17₃** et haute **17₄**, respectivement, de l'armature de dossier **17.** Ces moyens de fixation peuvent notamment comprendre :
- des reliefs complémentaires, par exemple pour une fixation en force du module central de garniture **40** sur l'armature de dossier **17** ; et/ou
- des trous correspondant pour une fixation à l'aide de vis, de boulons ou de rivets, par exemples ; et/ou
- des reliefs complémentaires d'emboitage élastique (ou clips), pour une fixation par emboîtage élastique.

Cette dernière solution apparait la plus favorable qui limite le nombre de pièces et de manipulations nécessaires pour fixer le support **54** sur l'armature de dossier **17.**

En outre, selon l'exemple illustré, le module central de garniture **40** peut comprendre encore des bretelles **56** limitant la déflexion du support **54** par rapport à l'armature de dossier **17.** Ici, les bretelles **56** permettent en outre de fixer le support **54** sur les montants **17₁**, **17₂** de l'armature de dossier **17.** Chaque bretelle **56** comporte ici une poutrelle **57,** en contact avec le support **54.** Ici, la poutrelle **57** est fixée au support **54.** Pour ce faire, le support **54** comporte, dans l'exemple illustré, des crochets **59** d'emboîtage élastique d'une poutrelle **57** respective. Il est à noter ici que les crochets **59** sont sur la face **54B** du support **54** opposée à la face **54A** destinée à être orientée vers l'occupant du siège. On assure ainsi un meilleur confort de l'occupant et/ou un meilleur maintien du support **54,** notamment contre la déflexion du support **54** quand un occupant s'appuie sur le dossier **16.** Selon une première variante, les bretelles **56** peuvent être fixées sur le support **54** avant le montage du module central de garniture **40** sur l'armature de dossier **17.** Selon une autre variante, les bretelles **56** sont fixées sur l'armature de dossier **17,** préalablement au montage du module central de garniture **40** sur l'armature de dossier **17.** Dans ce cas, lors du montage du module central de garniture **40,** les poutrelles **57** s'emboîtent élastiquement dans les crochets **59** par simple mouvement relatif du module central de garniture **40** en direction de l'armature de dossier **17.**

Chaque bretelle **56** comprend en outre au moins une première lame **62,** ici deux lames **62.** Chaque première lame **62** s'étend depuis une poutrelle **57** respective. Les premières lames **62** sont avantageusement plus souples que le support **54.** Les premières lames **62** assurent un maintien plus souple du support **54** lorsqu'un occupant du siège prend appui sur le dossier **16.**

À l'extrémité des première lames **62,** opposées à la poutrelle **57,** chaque bretelle **56** définit un logement **58** de réception d'une portion d'un montant **17₁**, **17₂** respectif, et des trous **60** ménagés sur la paroi formant le logement **58,** destinés à être disposés en vis-à-vis de trous correspondant sur les montants **17₁**, **17₂**, pour une fixation par vis, boulon ou rivet, notamment.

De plus, dans l'exemple illustré, chaque bretelle **56** comporte une deuxième lame **64,** orientée sensiblement perpendiculairement aux premières lames **62** et pouvant prendre appui, chacune, sur un montant **17₁**, **17₂** respectif de l'armature de dossier **17.** Ces deuxièmes lames **64** élastiques assurent le bon positionnement vers l'avant du dossier **16,** de la poutre **57** de la bretelle **56** considérée. Ces deuxièmes lames **64** sont de préférence plus rigides que les premières lames **62.** Les deuxièmes lames **64,** ici compressées entre le support 54 et l'armature de dossier **17** tendent à repousser le support **54** limitant ainsi la déflexion du support **54** par rapport à l'armature de dossier **17** lorsqu'un occupant du siège prend appui sur le dossier **16.** L'élasticité des lames **62, 64** apporte en outre du confort à l'occupant du siège de véhicule, en ce que le support **54** peut se déplacer légèrement par rapport à l'armature de dossier **17,** par déformation élastique des lames **62, 64.**

Les bretelles **56,** afin d'être fixées à l'armature de dossier **17,** peuvent notamment comprendre :
- des reliefs complémentaires, par exemple pour une fixation en force des bretelles **56** sur l'armature de dossier **17** ; et/ou
- des trous correspondant pour une fixation à l'aide de vis, de boulons ou de rivets, par exemples ; et/ou
- des reliefs complémentaires d'emboitage élastique (ou clips), pour une fixation par emboîtage élastique.

Comme cela est visible sur les figures 4 à 8, le support **54** peut être équipés de différents éléments associés chacun à une ou plusieurs fonctions de confort de l'occupant du siège **10.**

Selon l'exemple illustré, un guide d'air **66** est ainsi fixé au support **54,** de manière étanche. Le guide d'air **66** comporte des trous **66₁** destinés à être disposés sensiblement en regard des trous **47** dans le bloc de mousse **46** du module central de garniture **40.** Ce guide d'air **66** est disposé au niveau d'une ouverture traversante dans le support **54,** un ventilateur **67** étant fixé sur la face opposée **54B** du support **54** pour souffler de l'air dans le guide d'air **66.** Avantageusement, le guide d'air **66** peut avoir une forme ergonomique assurant une réception plus confortable du dos de l'occupant du siège de véhicule. Cette fonction de réception plus confortable du dos de l'occupant du siège peut, en variante, être assurée par un élément distinct d'un guide d'air **66.**

Par ailleurs, des poches gonflables **68, 69** sont fixées sur le support **54,** ici sur la face **54A** du support **54** destinée à être orientée vers le dos de l'occupant du siège **10.** Dans l'exemple illustré, les poches gonflables **68, 69** sont sensiblement régulièrement réparties sur le support **54,** en matrice. Dans l'exemple de la figure 5, huit poches gonflables **68, 69** sont ainsi réparties en quatre lignes de deux colonnes de poches gonflables **68, 69.** Les huit poches gonflables **68, 69** peuvent être alimentées en air sélectivement par une pompe à air **70,** via une vanne **71.** Ainsi, en commandant la vanne **71** selon un schéma de gonflage particulier des poches gonflables **68, 69,** il est possible d'obtenir un effet massant sur le dos de l'occupant du siège **10.** Alternativement, toutes les poches gonflables **68, 69** peuvent être alimentées en air simultanément, notamment pour améliorer le maintien du dos de l'occupant du siège, les poches gonflables **68, 69** se gonflant jusqu'à s'adapter à la forme du dos de l'occupant du siège. Selon encore une autre alternative, une partie des poches gonflables **68** permet de masser une partie du dos de l'occupant du siège **10,** notamment la partie haute du dos, tandis que l'autre partie des poches gonflables **69** assurent essentiellement une fonction de maintien du dos de l'occupant du siège, notamment une fonction de maintien d'une partie basse du dos de l'occupant du siège.

D'autres fonctions de confort peuvent être associées au support **54.** Notamment un ou plusieurs haut-parleurs et/ou un ou plusieurs dispositifs vibrants (de l'anglais « exciter ») et/ou un ou plusieurs fils résistifs de chauffage du dos de l'occupant du siège de véhicule **10** peuvent être fixés sur le support **54.** De préférence, le ou les haut-parleurs et/ou le ou les dispositif vibrants et/ou le ou les fils résistifs sont disposés entre le support **54** et le bloc de mousse **46** du module central de garniture **40** ou au moins partiellement reçus dans le bloc de mousse **46** du module central de garniture **40.**

De préférence, tous les éléments fixés au support **54** nécessitant une alimentation électrique et/ou une commande depuis l'extérieur du siège et/ou un transfert d'information vers l'extérieur du siège sont reliés électriquement à un unique connecteur **72** assurant la liaison avec l'extérieur du siège. Ainsi, le montage du siège est grandement simplifié, qui ne nécessite plus qu'une connexion électrique entre l'extérieur du siège et le connecteur **72** pour alimenter électriquement, commander et communiquer avec les éléments adaptés du module central de garniture **40.** Le connecteur **72** est avantageusement disposé sur la face **54B** du support **54** destinée à être opposée au dos de l'occupant du siège.

Par ailleurs, comme cela est visible notamment sur la figure 7, sur chaque montant **17₁**, **17₂** de l'armature de dossier **17,** est fixé un support **73, 74** du premier module latéral de garniture **36** et du deuxième module latéral de garniture **38,** respectivement. Chacun des supports **73, 74** peut être fixé au montant **17₁**, **17₂** associé par emboitage élastique et/ou vissage et/ou rivetage et/ou fixation en force, notamment.

Sur chacun des supports **73, 74** est fixé le bloc de mousse **42, 44** associé du premier ou du deuxième module latéral de garniture **36, 38.** Notamment, chaque bloc de mousse **42, 44** peut être surmoulé sur le support **73, 74** respectif. Chaque bloc de mousse **42, 44** peut alternativement être collé ou emboité élastiquement sur le support **73, 74** associé. Dans ce dernier cas, les blocs de mousse **42, 44** peuvent comprendre des inserts en plastique.

Une poche gonflable **76, 78** d'un dispositif de réglage du maintien latéral du dos de l'occupant du siège (de l'anglais « bolster ») est fixée sur chaque support **73, 74** de module latéral.

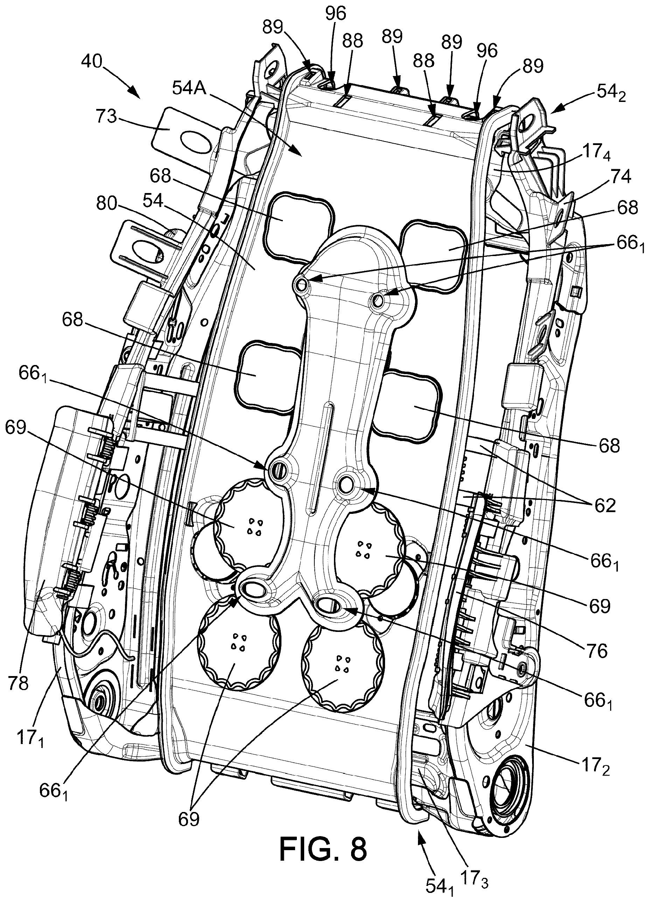

Sur le support **73** du premier module latéral de garniture **36** illustré à la figure 8, est fixé une poche gonflable **78** et une pompe **80** adaptée à gonfler la poche gonflable **78.** La poche gonflable **78** a une fonction de confort plutôt que de sécurité, en ce qu'elle peut permettre un effet massant et/ou une meilleure adaptation de la forme du module latéral de garniture **36** à l'occupant du siège. Une pompe à air **80** peut également être fixée sur le support **74** de l'autre module latéral de garniture, afin de gonfler la poche gonflable **78** associée. Avantageusement, en effet, une pompe à air **80** est disposée dans chaque module latéral de garniture **36, 38** pour éviter une connexion aéraulique entre un module de garniture **36, 38, 40** et un autre **36, 38 40.**

Chaque module latéral de garniture **36, 38** peut en outre être équipé d'un ou plusieurs coussins gonflables de massage et/ou d'un dispositif de coussin gonflable de sécurité latéral. Le module latéral de garniture **36** ou **38** peut être pré-équipé de l'airbag **80** avant assemblage sur armature.

Là encore, les modules latéraux de garniture **36, 38** peuvent comprendre d'autres fonctions de confort.

Comme pour le module central de garniture **40,** les éléments de chaque module latéral de garniture **36, 38** nécessitant une alimentation électrique, une commande ou un transfert d'informations, sont de préférence reliés électriquement à un unique connecteur de chaque module latéral de garniture **36, 38.** On simplifie ainsi le montage du dossier du siège.

Le dossier **10** tel qu'il vient d'être décrit, est particulièrement simple à monter.

Ainsi, un procédé de montage d'un tel dossier peut comprendre une première étape consistant à fournir une armature de dossier **17** et les trois modules de garniture **36, 38, 40.** À cette étape, l'armature de dossier **17** peut éventuellement être déjà fixée sur l'armature d'assise **15** et/ou avoir déjà reçu l'armature d'appui-tête **35** en tout ou partie. Notamment, les tiges de support de l'appui-tête peuvent déjà être fixées sur l'armature de dossier **17.**

Dans un deuxième temps, on fixe les modules de garniture **36, 38, 40** sur l'armature de dossier **17.** L'ordre de fixation des modules de garniture **36, 38, 40** peut dépendre de la géométrie des supports **54, 73, 74** des différents modules de garniture **36, 38, 40** et de leurs fixations sur l'armature de dossier **17,** notamment. Selon l'exemple de dossier décrit précédemment, on peut par exemple commencer par fixer le module central de garniture **40,** puis les deux modules latéraux **36, 38.** Alternativement cependant, le module central de garniture **40** peut être fixé après les deux modules latéraux **36, 38.**

II est à noter que ces fixations successives peuvent être réalisées en tout ou partie, par un automate. Notamment, le module central de garniture **40** peut être « empioché » sur la traverse haute **17₄** de l'armature de dossier **17,** puis l'extrémité basse **54₁** peut être fixée sur la traverse basse **17₃** de l'armature de dossier **17.** Le vissage des deuxièmes moyens de fixation **56** peut intervenir après cette étape. Par « empioché », on entend ici que l'extrémité repliée **54₂** du support **54** du module central de garniture **40** vient prendre appui sur la traverse haute **17₄** de l'armature de dossier **17,** des reliefs complémentaires de l'extrémité repliée **54₂** du support **54,** d'une part, et de l'armature de dossier **17** et/ou de l'armature d'appui-tête **35,** d'autre part, guidant un mouvement essentiellement de rotation du support **54** par rapport à un axe transversal d'extension de la traverse haute **17₄** de l'armature de dossier **17.** Ici, par exemple, des encoches ou fentes réalisées à l'extrémité **54₂** du support **54** et recevant les tiges de support d'appui-tête **35** permettent le guidage du mouvement du module central de garniture **40** par rapport à l'armature de dossier **17.**

On réalise ensuite les connexions électriques voire aérauliques nécessaires. De préférence, il n'y a qu'une seule connexion électrique à réaliser pour chaque module de garniture **36, 38, 40.**

Enfin, on fixe la coque arrière **48** sur l'armature de dossier **17** et les éléments de finition **50, 52.** Là encore, l'ordre de fixation de la coque arrière **48** et des éléments de finition **50, 52** peut varier.

Le montage du siège **10** tel que décrit précédemment est très simple à réaliser. En outre, il peut être identique ou sensiblement identique, quelles que soient les fonctions intégrées ou non au dossier **16.** Il est ainsi possible de prévoir un unique automate pour monter une grande variété de dossiers de siège de véhicule distincts, toujours avec un temps de montage sensiblement égal. La ligne de montage d'une telle gamme de sièges est ainsi plus simple et plus facile à gérer.

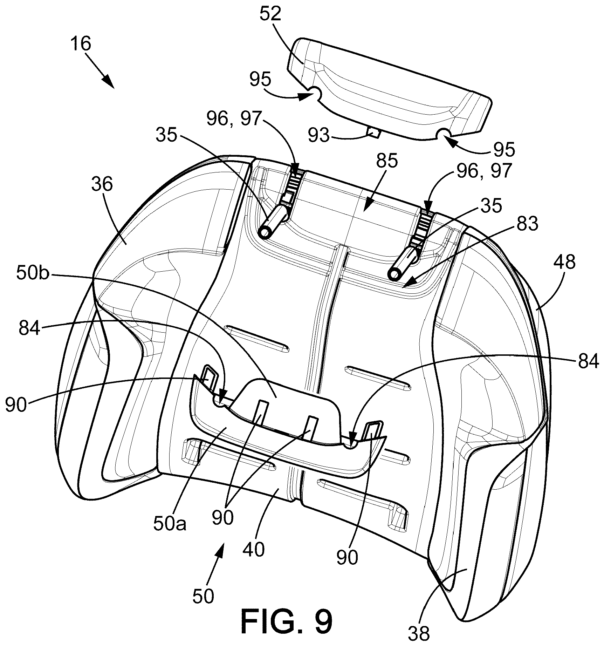

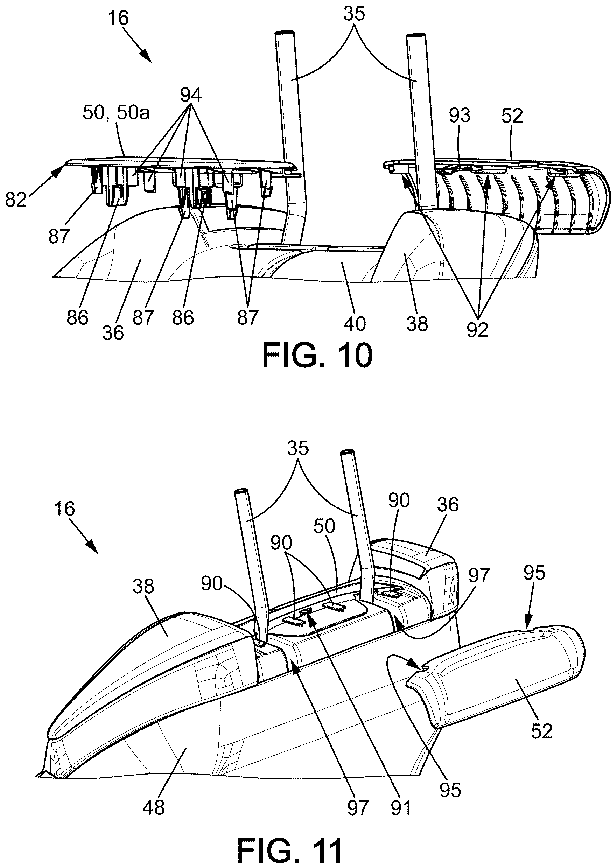

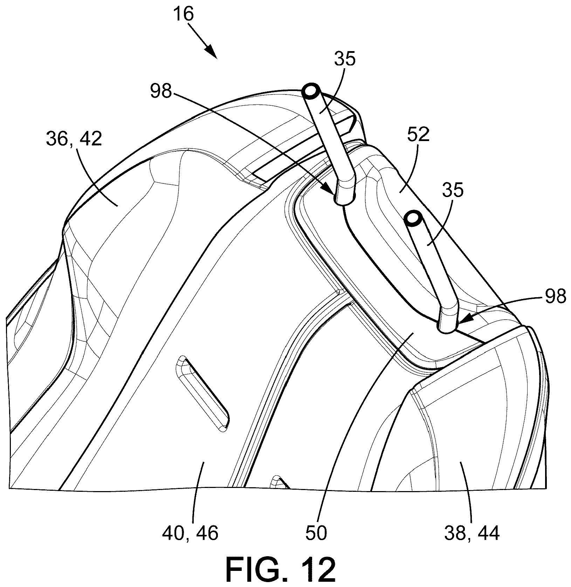

Dans la suite, on décrit plus en détail les éléments de finition **50, 52** et leur fixation sur le dossier **16,** en regard des figures 9 à 12.

Comme cela est notamment visible sur la figure 9, un premier élément de finition **50** est adapté à être monté sur le dossier **16** par une face avant du dossier **16,** destinée à être orientée vers un occupant du siège. Le premier élément de finition **50** comprend une première partie **50a** sensiblement plane, avec une nervure **82** s'étendant au moins à l'extrémité avant de la première partie **50a.** Ici, la nervure **82** s'étend également sur les côtés latéraux de la première partie **50a** du premier élément de finition **50.** La nervure **82** peut notamment être formée par un rebord du premier élément de finition **50.** Cette nervure **82** est reçue dans une rainure **83** complémentaire, formée sur le bloc de mousse **46** du module central de garniture **40,** en l'espèce sur une extrémité sommitale du bloc de mousse **46** du module central de garniture **40.** Ainsi, la réception de la nervure **82** dans la rainure **83** facilite la mise en position précise du premier élément de finition **50** sur le bloc de mousse **46** du module central de garniture **40.** La rainure **83** s'étend ici majoritairement devant les tiges de support d'appui-tête **35.**

Le premier élément de finition **50** comprend par ailleurs deux premières encoches **84,** réalisées ici sur l'extrémité de la première partie **50a** du premier élément de finition **50,** dépourvue de nervure **82.** Ici les encoches **84** ont la forme d'arcs de cercle, de rayon sensiblement égal au rayon des tiges de support d'appui-tête **35.** En l'espèce, les encoches **84** sont symétriques par rapport à un plan médian du premier élément de finition **50.**

Le premier élément de finition **50** présente également une deuxième partie **50b** plate. La deuxième partie **50b** du premier élément de finition **50** s'étend depuis la première partie **50a.** Les première et deuxième parties **50a, 50b** du premier élément de finition **50** forment une marche, la deuxième partie **50b** étend plus basse que la première partie **50a.** La deuxième partie **50b** du premier élément de finition **50** est ainsi adaptée à être reçue dans un renfoncement **85** complémentaire, formé par le bloc de mousse **46** du module central de garniture **40.** Le renfoncement **85** peut être au moins en partie derrière les tiges de support d'appui-tête **35,** dans la direction longitudinale **X** du siège **10.** Ici, le renfoncement **85** est majoritairement derrière les tiges de support d'appui-tête **35.**

Le premier élément de finition **50** est également muni de moyens **86, 87** de fixation à la plaque support **54** du module central de garniture **40.** En l'espèce, ces moyens de fixation **86, 87** comprennent des premiers reliefs d'emboîtage élastique **86** adaptés à coopérer avec des premières ouvertures **88** dans la plaque support **54.** Ici, les premières ouvertures **88** sont réalisées sur l'extrémité **54₂** supérieure recourbée de la plaque support **54.** Les premiers reliefs d'emboîtage élastique **86** du premier élément de finition **50** s'étendent depuis la première partie **50a** du premier élément de finition **50.** Les premiers reliefs d'emboitage élastique **85** du premier élément de finition **50** s'étendent selon une direction sensiblement normale à la première partie **50a** du premier élément de finition **50.** Les premiers reliefs d'emboîtage élastique **85** du premier élément de finition 50 sont ici des pions rigides munis chacun d'une languette déformable élastiquement, au voisinage d'une extrémité libre de chaque pion rigide.

Les moyens **86, 87** de fixation du premier élément de finition **50** sur la plaque support **54** du module central de garniture **40** comprennent encore des deuxièmes reliefs d'emboîtage élastique **87,** en l'espèce des languettes d'emboîtage élastique, déformable élastiquement. Les deuxièmes reliefs d'emboîtage élastique **87** sont adaptés à être reçus dans des deuxièmes ouvertures **89** dans la plaque support **54.** Ici, les deuxièmes ouvertures **89** sont réalisées sur l'extrémité **54₂** supérieure recourbée de la plaque support **54.** Deux languettes d'emboîtage élastique **87** s'étendent ici depuis la première partie **50a** du premier élément de finition **50,** selon une direction normale à la première partie **50a.** Deux languettes d'emboîtage élastique **87** s'étendent depuis la deuxième partie **50b** du premier élément de finition, selon une direction normale à la deuxième partie **50b.**

Le premier élément de finition **50** et le deuxième élément de finition **52** comprennent des moyens de guidage **90, 92** complémentaires d'un mouvement relatif du deuxième élément de finition **52** par rapport au premier élément de finition **50,** jusqu'à une position de fixation du deuxième élément de finition **52,** ici sur le premier élément de finition **50.**

Ici, les moyens de guidage **90, 92** comprennent des langues **90** reçues, de préférence serrées, dans des logements complémentaires **92** formés par le deuxième élément de finition **52.** Ici, les deux langues **90** s'étendent parallèlement à la direction longitudinale **X** du siège de véhicule **10.** Ici, le premier élément de finition **52** comprend quatre telles langues **90** réparties sur la largeur du premier élément de finition **52.** Bien entendu, le nombre de langues **90** n'est pas limitatif. Ce nombre de langues **90** peut bien au contraire d'être égal à 1, 2, 3, 4 ou plus. Les langues **90** peuvent avoir une forme de queue d'aronde. Bien entendu cette forme des langues **90** n'est pas limitative. Au contraire, tout relief saillant, en particulier dans la direction longitudinale **X** du siège de véhicule **10,** peut *a priori* être mis en oeuvre, en combinaison avec un relief en creux adapté à recevoir le relief saillant. On peut encore noter qu'ici les reliefs saillants sont tous sur le premier élément de finition **50** et que les reliefs en creux complémentaires sont tous sur le deuxième élément de finition **52.** Cependant, chacun parmi le premier élément de finition **50** et le deuxième élément de finition **52** peut comporter un ou plusieurs reliefs saillants et un ou plusieurs reliefs en creux complémentaires.

Le premier élément de finition comprend encore des moyens **91** de fixation au deuxième élément de finition **52.** Les moyens de fixation au deuxième élément de finition **52** comprennent une ouverture **91,** formée sur la marche entre les première et deuxième parties **50a, 50b** du premier élément de finition **50.** L'ouverture **91** est adaptée à recevoir une languette d'emboîtage élastique **93** du deuxième élément de finition **52** qui s'étend sensiblement parallèlement à la direction longitudinale **X** du siège **10.**

Selon l'exemple illustré, le premier élément de finition **50** comprend encore des saillies **94** verticales, s'étendant ici depuis la première partie **50a** du premier élément de finition **50.** Les saillies **94** ont une fonction d'entretoise, assurant le maintient à distance de la première partie **50a** du premier élément de finition **50** par rapport à la plaque support **54.** Ces saillies **94** permettent ainsi de déterminer la compression du bloc de mousse **46** entre le premier élément de finition **50** et la plaque support **54** du module central de garniture **40.**

Le deuxième élément de finition **52** est ici réalisée sous la forme d'une coque courbe. La courbure du deuxième élément de finition **52** est adaptée pour recouvrir le bloc de mousse **46** du module central de garniture **40,** notamment sur la face arrière du dossier **16.**

Le deuxième élément de finition **52** comprend également deux encoches **95.** Les deux encoches **95** ont la forme d'arc de cercle, de rayon sensiblement égal au rayon des tiges de support d'appui-tête **35.**

La fixation des éléments de finition **50, 52** sur le dossier **16** est par exemple réalisée comme décrit ci-après.

Le module central de garniture **40** est fixé sur l'armature de dossier **17,** de telle sorte que les deux tiges de support d'appui-tête **35** sont chacune reçue dans une fente **96, 97** respective du bloc de mousse **46** et de la plaque support **54** du module central de garniture **40,** comme illustré à la figure 9. Chaque fente **96, 97** présente un débouché à une extrémité longitudinale, destinée à être orientée vers l'arrière du siège de véhicule **10.** Avantageusement, chaque tige de support d'appui-tête **35** est reçue dans la fente **96** respective, au voisinage voire en contact, avec une extrémité fermée de la fente **96,** opposée à l'extrémité longitudinale de la fente **96** formant un débouché pour la fente **96.** On peut noter ici que du fait de la présence des fentes **96, 97,** le module central de garniture **40** peut aisément être rapporté sur l'armature de dossier **17** ou retirer de celui-ci. Notamment, le module central de garniture **40** peut être rapporté sur l'armature de dossier **17** par un mouvement essentiellement selon la direction longitudinale **X** du siège de véhicule **10,** éventuellement associé à un mouvement selon une direction verticale **Z,** le cas échéant.

De préférence, le bloc de mousse **46** du module central de garniture **40** est alors également comprimé entre la plaque support **54** et la coque **48.**

On fixe alors le premier élément de finition **50** sur le module central de garniture **40.** Ici, la réception de la nervure **82** du premier élément de finition **50** dans la rainure **83** complémentaire et/ou de la deuxième partie **50b** dans le renfoncement **85** facilite la mise en position du premier élément de finition **50** sur le module central de garniture **40.** Ceci contribue notamment à placer les reliefs d'emboîtage élastique **86, 87** du premier élément de finition **50** en regard des fentes **88, 89** correspondantes, dans la plaque support **54** du module central de garniture **40.** On emboîte alors élastiquement les reliefs d'emboîtage élastique **86, 87** dans les fentes correspondantes **88, 89.** Ici, on note que du fait de la présence des saillies **94,** la première partie **50a** du premier élément de finition **50** est maintenue à distance de la plaque support **54,** permettant ainsi de fixer la contrainte exercée par la plaque support **54** et la première partie **50a** du premier élément de finition **50,** sur le bloc de mousse **46** du module central de garniture **40.** Les reliefs d'emboîtage élastique **86, 87** traversent alors le bloc de mousse **46** du module central de garniture **40.** Avantageusement, des passages adaptés sont formés dans le bloc de mousse **46** pour permettre le passage des reliefs d'emboîtage élastique **88, 89.**

Il est à noter ici que le premier élément de finition **50** peut être fixé depuis l'avant du dossier du siège **16.**

Une fois le premier élément de finition **50** fixé sur la plaque support **54** du module central de garniture **40,** les encoches **84** sont en regard, voire en contact, avec les tiges de support d'appui-tête **35.** On vient alors fixer le deuxième élément de finition **52** sur le premier élément de finition **50.** On note ici que la fixation du deuxième élément de finition **52** se fait depuis l'arrière du dossier de siège **16.** Pour ce faire, on place d'abord le deuxième élément de finition **52** en regard du premier élément de finition **50,** de telle sorte que les langues **90** du premier élément de finition **50** soient en regard des logements **92** complémentaires du deuxième élément de finition **52.** On déplace alors le deuxième élément de finition **52** vers le premier élément de finition **50,** ici selon la direction longitudinale **X** du siège de véhicule, ce déplacement étant guidé par la réception des langues **90** dans les logements complémentaires **92.** Le déplacement relatif du deuxième élément de finition **52** par rapport au premier élément de finition **50,** est réalisé jusqu'à l'emboîtage élastique de la languette **93** du deuxième élément de finition **52** dans l'ouverture **91** correspondante sur le premier élément de finition **50.** Une fois le deuxième élément de finition **52** fixé sur le premier élément de finition, les encoches **95** du deuxième élément de finition **52** sont en regard, chacune, d'une encoche respective **84** du premier élément de finition **50.** Chaque paire d'encoches **84, 95** des premier et deuxième éléments de finition **50, 52** forment ainsi un passage **98** pour une tige de support d'appui-tête **35** respective.

En outre, le deuxième élément de finition **52,** une fois fixé, recouvre les fentes **97** dans le bloc de mousse **46** du module central de garniture **40.** Ici, le deuxième élément de finition **52** recouvre également une partie au moins du bord supérieur de la coque arrière **48.**

On peut noter que dans l'exemple décrit précédemment, le deuxième élément de finition **52** est fixé uniquement au premier élément de finition **50.** Il est ainsi particulièrement simple de monter et/ou démonter le deuxième élément de finition **52.**

Un module de garniture **36, 38, 40** du siège **10** peut facilement être changé, sans avoir à changer les autres modules de garniture **36, 38, 40,** voire sans avoir à les démonter. Il peut être intéressant, par exemple, de remplacer le module central de garniture **40** par un module central de garniture **40** accueillant une ou plusieurs nouvelles fonctions de confort par rapport à l'ancien module central de garniture **40.** Dans ce cas, ne pas démonter les modules latéraux de garniture signifie ne pas toucher aux fonctions de sécurité du siège que sont les deux airbags latéraux présents dans ou associés aux modules latéraux de garniture **36, 38.** On limite ainsi les risques de défaillance de ces systèmes de sécurité après l'opération de remplacement du module central de garniture **40.**

La présente invention ne se limite pas aux seuls exemples décrits ci-dessus. L'invention est au contraire susceptible de nombreuses variantes accessibles à l'homme de l'art.

Ainsi, dans l'exemple illustré, chaque module de garniture **36, 38, 40** comprend un support et un bloc de mousse fixé sur le support. Alternativement, un module de garniture peut être dépourvu de support, voire ne comprendre qu'un bloc de mousse. Lorsqu'un module de garniture est dépourvu de support comme décrit précédemment, il peut comporter des inserts rigides, incorporés dans le bloc de mousse, pour en faciliter la fixation sur l'armature de dossier. De tels inserts peuvent être incorporés en surmoulant le bloc de mousse correspondant sur ces inserts. Par « rigide », on entend ici que les inserts sont notamment plus rigides que la mousse.

Le support **54** du module de garniture central **40** peut également prendre d'autres formes que celle décrite ci-avant. Notamment, le support **54** peut être un cadre comportant deux traverses, de préférence rigides, et deux montants, rigides ou souples, des éléments ressorts, notamment des fils élastiques s'étendant entre les traverses et/ou entre les montants. Dans ce cas, avantageusement, les traverses sont fixées sur les traverses de l'armature de dossier. Les montants du support peuvent alors être libres par rapport aux montants de l'armature de dossier **17.** Des bretelles **56** peuvent également être prévues entre les montants du support alors formé et les montants de l'armature de dossier **17,** notamment quand les montants sont rigides. Le bloc de mousse du module central de garniture peut alors être surmoulé sur le support **54,** notamment sur les traverses du support **54** en forme de cadre. Même lorsque le support **54** n'est pas sous forme d'une plaque telle que décrite ci-avant, un ou plusieurs éléments assurant a une fonction de confort peut/vent être fixé/s sur le support **54.** Ces éléments sont notamment ceux décrits précédemment. Ceci est en particulier vrai lorsque le support a une forme de cadre comme décrit ci-dessus.

Également, chaque module de garniture **36, 38, 40** peut comprendre une housse recouvrant en tout ou partie le bloc de mousse **42, 44, 46** respectif. La housse peut notamment être disposée dans le moule servant au surmoulage du bloc de mousse **42, 44, 46** sur le support **54, 73, 74** respectif. La housse adhère alors au bloc de mousse **42, 44, 46.** Alternativement, la housse peut être fixée sur le bloc de mousse **42, 44, 46** et/ou sur le support **54, 73, 74** après la formation du bloc de mousse **42, 44, 46.** En d'autres termes, la housse peut être rapportée sur le bloc de mousse **42, 44, 46** et/ou sur le support **54, 73, 74.** La fixation de la housse est alors réalisée par tout moyen accessible à l'homme de l'art.

Selon une autre variante encore, une housse unique est mise en oeuvre pour recouvrir les trois blocs de mousse **42, 44, 46** des modules de garniture **36, 38, 40.** Là encore, dans ce cas, la housse est rapportée sur les blocs de mousse **42, 44, 46** et/ou sur les supports **54, 73, 74** respectif des modules de garniture **36, 38, 40,** voire sur l'armature de dossier **17** et/ou la coque arrière **48.** Et là encore, la fixation de la housse est réalisée par tout moyen accessible à l'homme de l'art.

Avantageusement, chaque module de garniture **36, 38, 40** est garni indépendamment des deux autres, comme décrit précédemment. Alternativement cependant, il est envisageable qu'un bloc de mousse, par exemple, soit commun à plusieurs modules de garniture, notamment à tous les modules de garnitures **36, 38, 40.**

Enfin, dans l'exemple illustré, les bretelles **56** sont fixées entre le support **54** et l'armature de dossier **17.** Alternativement, cependant, les bretelles peuvent être fixées entre le support **54** et les modules latéraux **36, 38,** notamment les supports **73, 74** des modules latéraux **36, 38.** Des bretelles **56** peuvent également être fixées sur l'armature de dossier **17** et/ou sur les supports **73, 74** des modules latéraux de garniture **36, 38,** et n'être qu'en contact avec le support **54,** notamment avec la face **54B** du support **54** qui n'est pas orientée vers l'occupant du siège.

Même dans le cas où les bretelles **56** sont fixées dans les modules latéraux **36, 38,** le module central de garniture **40** peut encore être fixé à l'armature de dossier **17,** indépendamment de la fixation aux modules latéraux **36, 38** via les bretelles **56.**

Plus généralement, dans l'exemple décrit ci-avant, chaque module de garniture **36, 38, 40** est fixé à l'armature de dossier **17** indépendamment des autres modules de garniture **36, 38, 40.** En d'autres termes, des moyens de fixation sont mis en oeuvre uniquement entre l'armature de dossier, d'une part, et chacun des modules de garniture **36, 38, 40,** d'autre part. Alternativement, cependant, chaque module de garniture **36, 38, 40** peut être fixé sur l'armature d'assis **17** indépendamment des autres modules de garniture **36, 38, 40.** Ainsi, bien qu'il existe des moyens de fixation mis en oeuvre entre au moins deux modules de garnitures **36, 38, 40,** notamment entre le module central de garniture **40** et l'un ou les deux modules latéraux de garniture **36, 38,** chaque module de garniture **36, 38, 40** comporte des moyens de fixation aptes à assurer la fixation du module de garniture considéré sur l'armature de dossier **17,** indépendamment des autres modules de garniture **36, 38, 40.**

Par ailleurs, dans l'exemple illustré, la garniture du dossier est réalisée sous la forme de modules. La garniture peut être réalisée de manière différente. Il est cependant particulièrement avantageux que la garniture puisse être montée sur l'armature de dossier, depuis une face avant du dossier, sans avoir à retirer la ou les tiges de support d'appui-tête. Pour ce faire, la garniture présente avantageusement une fente par tige de support d'appui-tête, débouchant de manière que la tige de support d'appui-tête puisse être reçue dans la fente, par un déplacement relatif de la garniture par rapport à l'armature de dossier, selon une direction longitudinale du siège de véhicule. Ceci peut en effet permettre de pouvoir retirer la garniture de l'armature de dossier sans avoir à retirer la ou les tiges de support d'appui-tête.

Également, dans l'exemple illustré, le premier élément de finition est fixé sur la plaque support du module central de garniture par emboîtage élastique. D'autres moyens de fixation accessibles à l'homme de l'art peuvent cependant être mis en oeuvre. En outre, le premier élément de finition **50** peut être fixé en sus ou alternativement à la plaque support, à l'armature de dossier, au bloc de mousse du module central de garniture ou, plus généralement, à un support et/ou à un bloc de mousse de la garniture de dossier.

De même, le deuxième élément de finition peut être fixé, en sus ou alternativement au premier élément de finition, à l'armature de dossier, à la plaque support et/ou au bloc de mousse du module central de garniture, ou plus généralement, à un support et/ou à un bloc de mousse de la garniture de dossier. D'autres moyens de fixation que des moyens de fixation par emboîtage élastique, peuvent être mis en oeuvre pour fixer le deuxième élément de finition.

## Revendications

1. Dossier (16) de siège de véhicule (10) comprenant :
- une armature de dossier (17),
- une garniture de dossier (36, 38, 40) fixée sur l'armature de dossier (17), la garniture de dossier (36, 38, 40) présentant au moins une fente (96, 97), chaque fente (96, 97) étant adaptée à recevoir une tige de support d'appui-tête (35) par mouvement relatif de la garniture (36, 38, 40) par rapport à l'armature de dossier (17) selon une direction longitudinale (X) du siège de véhicule (10), et
- au moins un premier et un deuxième éléments de finition (50 ; 52), chaque élément de finition (50, 52) formant au moins une encoche (84, 95), une encoche du premier élément de finition (50) et une encoche (95) du deuxième élément de finition (52) définissant un passage (98) pour une tige de support d'appui-tête (35), le deuxième élément de finition (52) recouvrant au moins partiellement, de préférence totalement, la au moins une fente (96, 97) dans la garniture (36, 38, 40), au moins un parmi le premier et le deuxième éléments de finition (50 ; 52) étant en contact avec la garniture (36, 38, 40), notamment avec un bloc de mousse (42, 44, 46) de la garniture (36, 38, 40), dans lequel chaque élément de finition (50, 52) forme de préférence deux encoches (84, 95), telles que chaque encoche (84) du premier élément de finition (50) soit en regard d'une encoche (95) respective du deuxième élément de finition (52) pour définir un passage (98) de section complémentaire à la section d'une tige de support d'appui-tête (35) respective.

2. Dossier de siège de véhicule (16) selon la revendication 1, dans lequel le premier élément de finition (50) est fixé sur au moins l'un parmi la garniture (36, 38, 40), notamment un bloc de mousse (42, 44, 46) de la garniture (36, 38, 40) ou un support (54) d'un bloc de mousse (46) de la garniture (36, 38, 40), et l'armature de dossier (17), notamment par emboîtage élastique, et/ou le deuxième élément de finition (52) est fixé sur au moins l'un parmi la garniture (36, 38, 40), notamment un bloc de mousse (42, 44, 46) de la garniture (36, 38, 40) ou un support (54) d'un bloc de mousse (46) de la garniture (36, 38, 40), l'armature de dossier (17) et le premier élément de finition (50), notamment par emboîtage élastique, le deuxième élément de finition (52) étant de préférence fixé uniquement sur le premier élément de finition (50).

3. Dossier de siège de véhicule (16) selon la revendication 1 ou 2, dans lequel la garniture (36, 38, 40), notamment un bloc de mousse (42, 44, 46) de la garniture (36, 38, 40), a une rainure (83) recevant un relief complémentaire (82) du premier élément de finition (50), notamment une nervure (82) du premier élément de finition (50) ; et/ou

4. Dossier de siège de véhicule (16) selon l'une des revendications 1 à 3, dans lequel la garniture (36, 38, 40), notamment un bloc de mousse (42, 44, 46) de la garniture (36, 38, 40), présente un renfoncement (85) de section complémentaire à une partie (50b) du premier élément de finition (50), le renfoncement (85) étant de préférence disposé d'un côté opposé des tiges de support d'appui-tête (35) par rapport à la rainure (83) le cas échéant.

5. Dossier de siège de véhicule (16) selon l'une quelconque des revendications précédentes, dans lequel le premier élément de finition (50) et/ou le deuxième élément de finition (52) contraint la garniture (36, 38, 40), notamment un bloc de mousse (42, 44, 46) de la garniture (36, 38, 40).

6. Dossier de siège de véhicule (16) selon l'une quelconque des revendications précédentes, dans lequel le premier élément de finition (50) comporte des moyens de fixation à la garniture (36, 38, 40), notamment à un support (54) d'un bloc de mousse (46) de la garniture (36, 38, 40), en particulier des reliefs d'emboîtage élastique (86, 87) et/ou dans lequel le deuxième élément de finition (52) présente une forme de coque courbe, la courbure de la coque étant sensiblement égale à la courbure d'une partie de la garniture (36, 38, 40), notamment d'un bloc de mousse (46) de la garniture (36, 38, 40), recouvert/e par le deuxième élément de finition (52).

7. Dossier de siège de véhicule (16) selon l'une quelconque des revendications précédentes, dans lequel le deuxième élément de finition (52) comporte des moyens de fixation au premier élément de finition (50), notamment au moins un relief d'emboîtage élastique (93).

8. Dossier de siège de véhicule (16) selon l'une quelconque des revendications précédentes, dans lequel les premier et deuxième éléments de finition (50, 52) comportent des moyens de guidage (90, 92) complémentaires pour guider un déplacement relatif du deuxième éléments de finition (52) par rapport au premier élément de finition (50) jusqu'à une position de fixation du deuxième élément de finition (52), les moyens de guidage complémentaires (90, 92) comprenant de préférence au moins un, de préférence encore au moins deux et de manière encore plus préférée quatre couple/s d'un relief saillant (90) sur l'un parmi le premier élément de finition (50) et le deuxième élément de finition (52) et d'un relief en creux (92) adapté à recevoir le relief saillant (90), sur l'autre parmi le premier élément de finition (50) et le deuxième élément de finition (52).

9. Dossier de siège de véhicule (16) selon l'une quelconque des revendications précédentes, dans lequel la garniture (36, 38, 40) comprend au moins un module central de garniture (40), adapté à être fixé à l'armature de dossier (17).

10. Dossier de siège de véhicule (16) selon la revendication 9, comprenant en outre deux modules latéraux de garniture (36, 38) disposés chacun d'un côté respectif du module central de garniture (40), chacun des trois modules de garniture (36, 38, 40) étant de préférence adapté à être fixé à l'armature de dossier (17) indépendamment des deux autres modules de garniture (36, 38, 40), chacun des trois modules de garniture étant, de préférence encore, fixé à l'armature de dossier (17) indépendamment des deux autres modules de garnitures (36, 38, 40), chaque module de garniture (36 ; 38 ; 40) comprenant de manière plus préférée une garniture indépendante de la garniture des deux autres modules de garniture (36, 38, 40).

11. Dossier de siège de véhicule (16) selon la revendication 9 ou 10, dans lequel le module central de garniture (40) comprend au moins un support (54), fixé à l'armature de dossier (17), et un bloc de mousse (46) recouvrant en tout ou partie le support (54), le premier et/ou le deuxième élément/s de finition (50, 52) étant de préférence fixé/s sur le support (54) du module central de garniture (40) le cas échéant.

12. Dossier de siège de véhicule (16) selon l'une quelconque des revendications précédentes en combinaison avec la revendication 10, dans lequel chaque module latéral de garniture (36, 38) comprend un support (73, 74) sur lequel est fixé un bloc de mousse (42, 44).

13. Dossier de siège de véhicule (16) selon l'une quelconque des revendications précédentes en combinaison avec la revendication 9 ou 10, dans lequel le module central de garniture (40) et/ou au moins l'un, de préférence chacun parmi les modules latéraux de garniture (36, 38) comprend/nent une housse respective, chaque housse recouvrant au moins une partie du bloc de mousse (42, 44, 46) respectif, le cas échéant.

14. Dossier de siège de véhicule (16) selon l'une quelconque des revendications précédentes en combinaison avec la revendication 10, comprenant en outre une housse commune recouvrant en tout ou partie les trois modules de garniture (36, 38, 40), notamment les blocs de mousse (42, 44, 46) respectifs des trois modules de garniture (36, 38, 40), le cas échéant.

15. Procédé de montage d'un dossier (16) de siège de véhicule automobile (10) selon l'une quelconque des revendications 1 à 14, comprenant les étapes consistant à :
fournir une armature de dossier (17) ;
fournir une garniture (36, 38, 40) adaptée à être fixée sur l'armature de dossier (17) par une face avant du dossier (16), la garniture (36, 38, 40) présentant au moins une fente (96, 97) débouchante, adaptée à recevoir une tige de support d'appui-tête (35) ;
fixer la garniture (36, 38, 40) sur l'armature de dossier (17) ;
fixer les au moins deux éléments de finition (50, 52) de manière à former un passage (98) pour chaque tige de support d'appui-tête (35), le deuxième élément de finition (52) recouvrant au moins partiellement la au moins une fente (96, 97).

16. Procédé de remplacement d'une garniture (36, 38, 40) d'un dossier de siège de véhicule (16) selon l'une quelconque des revendications 1 à 14, comprenant les étapes consistant à :
i) retirer les premier et deuxième éléments de finition (50, 52) ;
ii) retirer la garniture (36, 38, 40) de l'armature de dossier (17) ;
iii) fixer une autre garniture (36, 38, 40) sur l'armature de dossier (17) ; et
iv) fixer des premier et deuxième éléments de finition (50, 52), les premier et deuxième éléments de finition étant de préférence les mêmes aux étapes i) et iv).

## Patentansprüche

1. Rückenlehne (16) für eines Fahrzeugsitzes (10), umfassend:
- einen Rückenlehnenrahmen (17),
- eine Rückenlehnenausstattung (36, 38, 40), die an dem Rückenlehnenrahmen (17) befestigt ist, wobei die Rückenlehnenausstattung (36, 38, 40) wenigstens einen Schlitz (96, 97) umfasst, wobei jeder Schlitz (96, 97) dazu ausgebildet ist, eine Kopfstützenhaltestange (35) durch Relativbewegung der Ausstattung (36, 38, 40) in Bezug auf den Rückenlehnenrahmen (17) entlang einer Längsrichtung (X) des Fahrzeugsitzes (10) aufzunehmen, und
- wenigstens ein erstes und ein zweites Finishingelement (50; 52), wobei jedes Finishingelement (50, 52) wenigstens eine Aussparung (84, 95) bildet, wobei eine Aussparung des ersten Finishingelements (50) und eine Aussparung (95) des zweiten Finishingelements (52) einen Durchgang (98) für eine Kopfstützenhaltestange (35) definieren, wobei das zweite Finishingelement (52) den wenigstens einen Schlitz (96, 97) in der Ausstattung (36, 38, 40) wenigstens teilweise bedeckt, bevorzugt vollständig bedeckt, wobei wenigstens eines von erstem und zweitem Finishingelement (50; 52) mit der Ausstattung (36, 38, 40), insbesondere mit einem Schaumstoffblock (42, 44, 46) der Ausstattung (36, 38, 40) in Kontakt ist, wobei jedes Finishingelement (50, 52) bevorzugt zwei Aussparungen (84, 95) bildet, so dass jede Aussparung (84) des ersten Finishingelements (50) einer entsprechenden Aussparung (95) des zweiten Finishingelements (52) gegenüberliegt, um einen Durchgang (98) mit einem zum Querschnitt einer jeweiligen Kopfstützenhaltestange (35) komplementären Querschnitt zu bilden.

2. Rückenlehne für eines Fahrzeugsitzes (16) nach Anspruch 1, wobei das erste Finishingelement (50) an wenigstens einem aus der Ausstattung (36, 38, 40), insbesondere einem Schaumstoffblock (42, 44, 46) der Ausstattung (36, 38, 40) oder einem Träger (54) eines Schaumstoffblocks (46) der Ausstattung (36, 38, 40), und dem Rückenlehnenrahmen (17), insbesondere durch Schnappverbindung befestigt ist, und/oder
das zweite Finishingelement (52) an wenigstens einem aus Ausstattung (36, 38, 40), insbesondere einem Schaumstoffblock (42, 44, 46) der Ausstattung (36, 38, 40) oder einem Träger (54) eines Schaumstoffblocks (46) der Ausstattung (36, 38, 40), Rückenlehnenrahmen (17) und erstem Finishingelement (50), insbesondere durch Schnappverbindung befestigt, wobei das zweite Finishingelement (52) bevorzugt nur an dem ersten Finishingelement (50) befestigt ist.

3. Rückenlehne für eines Fahrzeugsitzes (16) nach Anspruch 1 oder 2, wobei die Ausstattung (36, 38, 40), insbesondere ein Schaumstoffblock (42, 44, 46) der Ausstattung (36, 38, 40), eine Nut (83) aufweist, die ein komplementäres Relief (82) des ersten Finishingelements (50), insbesondere eine Rippe (82) des ersten Finishingelements (50) aufnimmt; und/oder

4. Rückenlehne für eines Fahrzeugsitzes (16) nach einem der Ansprüche 1 bis 3, wobei die Ausstattung (36, 38, 40), insbesondere ein Schaumstoffblock (42, 44,46) der Ausstattung (36, 38, 40), eine Vertiefung (85) mit komplementärem Querschnitt zu einem Teil (50b) des ersten Finishingelements (50) aufweist, wobei die Vertiefung (85) in Bezug auf die Nut (83) ggf. bevorzugt auf einer gegenüberliegenden Seite der Kopfstützenhaltestangen (35) angeordnet ist.

5. Rückenlehne für eines Fahrzeugsitzes (16) nach einem der vorhergehenden Ansprüche, wobei das erste Finishingelement (50) und/oder das zweite Finishingelement (52) die Ausstattung (36, 38, 40), insbesondere einen Schaumstoffblock (42, 44, 46) der Ausstattung (36, 38, 40) einzwängt.

6. Rückenlehne für eines Fahrzeugsitzes (16) nach einem der vorhergehenden Ansprüche, wobei das erste Finishingelement (50) Mittel zum Befestigen an der Ausstattung (36, 38, 40), insbesondere an einem Träger (54) eines Schaumstoffblocks (46) der Ausstattung (36, 38, 40) umfasst, insbesondere elastische Einsteckreliefs (86, 87) und/oder wobei das zweite Finishingelement (52) eine gekrümmte Schalenform aufweist, wobei die Krümmung der Schale im Wesentlichen gleich der Krümmung eines Teils der Ausstattung (36, 38, 40) ist, insbesondere eines Schaumstoffblocks (46) der Ausstattung (36, 38, 40), der von dem zweiten Finishingelement bedeckt ist.

7. Rückenlehne für eines Fahrzeugsitzes (16) nach einem der vorhergehenden Ansprüche, wobei das zweite Finishingelement (52) Mittel zur Befestigung am ersten Finishingelement (50) aufweist, insbesondere wenigstens ein Schnappverbindungsrelief (93).

8. Rückenlehne für eines Fahrzeugsitzes (16) nach einem der vorhergehenden Ansprüche, wobei das erste und das zweite Finishingelement (50, 52) komplementäre Führungsmittel (90, 92) aufweisen, zum Führen einer Relativbewegung des zweiten Finishingelements (52) relativ zum ersten Finishingelement (50) in eine Befestigungsposition des ersten Finishingelements (50), wobei die komplementären Führungsmittel (90, 92) bevorzugt wenigstens ein, weiter bevorzugt wenigstens zwei und noch stärker bevorzugt vier Paare/s eines vorstehenden Reliefs (90) auf dem einen aus erstem Finishingelement (50) oder zweitem Finishingelement (52) aufweisen und eines vertieften Reliefs (92), das zur Aufnahme des vorstehenden Reliefs (90) ausgebildet ist, auf dem anderen aus erstem Finishingelement (50) und zweitem Finishingelement (52).

9. Rückenlehne für eines Fahrzeugsitzes (16) nach einem der vorhergehenden Ansprüche, wobei die Ausstattung (36, 38, 40) wenigstens ein zentrales Ausstattungsmodul (40) umfasst, das dazu ausgebildet ist, an dem Rückenlehnenrahmen (17) befestigt zu werden.

10. Rückenlehne für eines Fahrzeugsitzes (16) nach Anspruch 9, ferner umfassend zwei seitliche Ausstattungsmodule (36, 38), die auf einer jeweiligen Seite des zentralen Ausstattungsmoduls (40) angeordnet sind, wobei jedes der drei Ausstattungsmodule (36, 38, 40) bevorzugt dazu ausgebildet ist, an dem Rückenlehnenrahmen (17) befestigt zu werden, unabhängig von den beiden anderen Ausstattungsmodulen (36, 38, 40), wobei jedes der drei Ausstattungsmodule bevorzugt ferner an dem Rückenlehnenrahmen (17) unabhängig von den beiden anderen Verkleidungsmodulen (36, 38, 40) befestigt ist, wobei jedes Ausstattungsmodul (36; 38; 40) bevorzugt eine Ausstattung umfasst, die unabhängig von der Ausstattung der beiden anderen Ausstattungsmodule (36, 38, 40) ist.

11. Rückenlehne für eines Fahrzeugsitzes (16) nach Anspruch 9 oder 10, wobei das zentrale Ausstattungsmodul (40) wenigstens einen Träger (54) umfasst, der an dem Rückenlehnenrahmen (17) befestigt ist, und einen Schaumstoffblock (46), der den gesamten oder einen Teil des Trägers (54) bedeckt, wobei das erste und/oder das zweite Finishingelement (50, 52) ggf. bevorzugt an dem Träger (54) des zentralen Ausstattungsmoduls (40) befestigt ist/sind.

12. Rückenlehne für eines Fahrzeugsitzes (16) nach einem der vorhergehenden Ansprüche in Verbindung mit Anspruch 10, wobei jedes Ausstattungsseitenmodul (36, 38) einen Träger (73, 74) umfasst, an dem ein Schaumstoffblock (42, 44) befestigt ist.

13. Rückenlehne für eines Fahrzeugsitzes (16) nach einem der vorhergehenden Ansprüche in Verbindung mit Anspruch 9 oder 10, wobei das zentrale Ausstattungsmodul (40) und/oder wenigstens ein, bevorzugt jedes der Ausstattungsseitenmodule (36, 38) einen jeweiligen Bezug umfasst, wobei jeder Bezug ggf. wenigstens einen Teil des Schaumstoffblocks (42, 10 44, 46) bedeckt.

14. Rückenlehne für eines Fahrzeugsitzes (16) nach einem der vorhergehenden Ansprüche in Verbindung mit Anspruch 10, ferner umfassend einen gemeinsamen Bezug, der die drei Ausstattungsmodule (36, 38, 40) ganz oder teilweise bedeckt, insbesondere ggf. die jeweiligen Schaumstoffblöcke (42, 44, 46) der drei Ausstattungsmodule (36, 38, 40).

15. Verfahren zur Montage einer Rückenlehne (16) für eines Fahrzeugsitzes (10) nach einem der Ansprüche 1 bis 14, umfassend die folgenden Schritte:
Bereitstellen eines Rückenlehnenrahmens (17);
Bereitstellen einer Ausstattung (36, 38, 40), die dazu ausgebildet ist, an dem Rückenlehnenrahmen (17) durch eine Vorderseite der Rückenlehne (16) befestigt zu werden, wobei die Ausstattung (36, 38, 40) wenigstens einen durchgehenden Schlitz (96, 97) aufweist, der dazu ausgebildet ist, eine Kopfstützenhaltestange (35) aufzunehmen;
Befestigen der Garnitur (36, 38, 40) an dem Rückenlehnenrahmen (17);
Befestigen der wenigstens zwei Finishingelemente (50, 52) derart, dass sie einen Durchgang (98) für jede Kopfstützenhaltestange (35) bilden, wobei das zweite Finishingelement (52) wenigstens teilweise den wenigstens einen Schlitz (96, 97) bedeckt.

16. Verfahren zum Ersetzen einer Ausstattung (36, 38, 40) einer Rückenlehne für eines Fahrzeugsitzes (16) nach einem der Ansprüche 1 bis 14, umfassend die folgenden Schritte:
i) Entfernen des ersten und zweiten Finishingelements (50, 52);
ii) Entfernen der Ausstattung (36, 38, 40) vom Rückenlehnenrahmen (17);
iii) Befestigen einer weiteren Ausstattung (36, 38, 40) an dem Rückenlehnenrahmen (17); und
iv) Befestigen eines ersten und zweiten Finishingelements (50, 52), wobei das erste und zweite Finishingelement in den Schritten i) und iv) bevorzugt die gleichen sind.

## Claims

1. Backrest (16) for a vehicle seat (10) comprising:
- a backrest armature (17),
- a backrest upholstery (36, 38, 40) fixed to the backrest armature (17), the backrest upholstery (36, 38, 40) having at least one slit (96, 97), each slit (96, 97) being adapted to receive a headrest support rod (35) by relative movement of the upholstery (36, 38, 40) with respect to the backrest armature (17) in a longitudinal direction (X) of the vehicle seat (10), and
- at least a first and a second trim element (50; 52), each trim element (50, 52) forming at least one notch (84, 95), a notch of the first trim element (50) and a notch (95) of the second trim element (52) defining a passage (98) for a headrest support rod (35), the second trim element (52) covering at least partially, preferably completely, the at least one slit (96, 97) in the upholstery (36, 38, 40), at least one of the first and second trim elements (50; 52) being in contact with the upholstery (36, 38, 40), in particular with a foam block (42, 44, 46) of the upholstery (36, 38, 40), wherein each trim element (50, 52) preferably forms two notches (84, 95), such that each notch (84) of the first trim element (50) is facing a respective notch (95) of the second trim element (52) so as to define a passage (98) having a complementary cross section to the cross section of a respective headrest support rod (35).

2. Vehicle seat backrest (16) according to claim 1, wherein the first trim element (50) is fixed to at least one of the upholstery (36, 38, 40), in particular a foam block (42, 44, 46) of the upholstery (36, 38, 40) or a support (54) of a foam block (46) of the upholstery (36, 38, 40), and the backrest armature (17), in particular by elastic interlocking, and/or
the second trim element (52) is fixed to at least one of the upholstery (36, 38, 40), in particular a foam block (42, 44, 46) of the upholstery (36, 38, 40) or a support (54) of a foam block (46) of the upholstery (36, 38, 40), the backrest armature (17) and the first trim element (50), in particular by elastic interlocking, wherein the second trim element (52) is preferably fixed only to the first trim element (50).

3. Vehicle seat backrest (16) according to claim 1 or 2, wherein the upholstery (36, 38, 40), in particular a foam block (42, 44, 46) of the upholstery (36, 38, 40), has a groove (83) accommodating a complementary relief (82) of the first trim element (50), in particular a rib (82) of the first trim element (50); and/or

4. Vehicle seat backrest (16) according to one of claims 1 to 3, wherein the upholstery (36, 38, 40), in particular a foam block (42, 44, 46) of the upholstery (36, 38, 40), has a recess (85) having a section complementary to a part (50b) of the first trim element (50), the recess (85) being preferably arranged on an opposite side of the headrest support rods (35) with respect to the groove (83) if applicable.

5. Vehicle seat backrest (16) according to any one of the preceding claims, wherein the first trim element (50) and/or the second trim element (52) compresses the upholstery (36, 38, 40), in particular a foam block (42, 44, 46) of the upholstery (36, 38, 40).

6. Vehicle seat backrest (16) according to any one of the preceding claims, wherein the first trim element (50) comprises means for fixing it to the upholstery (36, 38, 40), in particular to a support (54) of a foam block (46) of the upholstery (36, 38, 40), in particular elastic interlocking reliefs (86, 87) and/or wherein the second trim element (52) is shaped as a curved shell, the curvature of the shell being substantially equal to the curvature of a portion of the upholstery (36, 38, 40), in particular of a foam block (46) of the upholstery (36, 38, 40), covered by the second trim element (52).

7. Vehicle seat backrest (16) according to any one of the preceding claims, wherein the second trim element (52) comprises means for fixing it to the first trim element (50), in particular at least one elastic interlocking relief (93).

8. Vehicle seat backrest (16) according to any preceding claim, wherein the first and second trim elements (50, 52) include complementary guiding means (90, 92) for guiding a relative movement of the second trim element (52) with respect to the first trim element (50) to a fixation position of the second trim element (52), the complementary guiding means (90, 92) preferably comprising at least one, more preferably at least two and even more preferably four pair(s) of a projecting relief (90) on one among the first trim element (50) and the second trim element (52) and of a female relief (92) adapted to accommodate the projecting relief (90), on the other among the first trim element (50) and the second trim element (52).

9. Vehicle seat backrest (16) according to any preceding claim, wherein the upholstery (36, 38, 40) comprises at least one central upholstery module (40), adapted to be fixed to the backrest armature (17).

10. Vehicle seat backrest (16) according to claim 9, further comprising two side upholstery modules (36, 38) each arranged on a respective side of the central upholstery module (40), each of the three upholstery modules (36, 38, 40) being preferably adapted to be fixed to the backrest armature (17) independently of the other two upholstery modules (36, 38, 40), each of the three upholstery modules being more preferably fixed to the backrest armature (17) independently of the other two upholstery modules (36, 38, 40), wherein each upholstery module (36; 38; 40) comprises in a more preferred way a upholstery independent with respect to the upholstery of the two other upholstery modules (36, 38, 40).

11. Vehicle seat backrest (16) according to claim 9 or 10, wherein the central upholstery module (40) comprises at least one support (54), fixed to the backrest armature (17), and a foam block (46) covering all or part of the support (54), the first and/or the second trim element(s) (50, 52) being preferably fixed on the support (54) of the central upholstery module (40) if applicable.

12. Vehicle seat backrest (16) according to any one of the preceding claims in combination with claim 10, wherein each side upholstery module (36, 38) comprises a support (73, 74) on which a foam block (42, 44) is fixed.

13. Vehicle seat backrest according to any one of the preceding claims in combination with claim 9 or 10, wherein the central upholstery module (40) and/or at least one, preferably each of the side upholstery modules (36; 38) comprise/s a respective cover, each cover covering at least part of the respective foam block (42, 44, 46), if applicable.

14. Vehicle seat backrest (16) according to any one of the preceding claims in combination with claim 10, further comprising a common cover covering all or part of the three upholstery modules (36, 38, 40), in particular the respective foam blocks (42, 44, 46) of the three upholstery modules (36, 38, 40), if applicable.

15. Method for mounting a backrest (16) of a motor vehicle seat (10) according to any one of claims 1 to 14, comprising the steps of:
providing a backrest armature (17);
providing upholstery (36, 38, 40) adapted to be fixed onto the backrest armature (17) over a front face of the backrest (16), the upholstery (36, 38, 40) having at least one through slit (96, 97), adapted to accommodate a headrest support rod (35);
fixing the upholstery (36, 38, 40) onto the backrest armature (17);
fixing the at least two trim elements (50, 52) so as to form a passage (98) for each headrest support rod (35), the second trim element (52) covering at least partially the at least one slit (96, 97).

16. Method of replacing upholstery (36, 38, 40) of a vehicle seat backrest (16) according to any one of claims 1 to 14, comprising the steps of:
i) removing the first and second trim elements (50, 52);
ii) removing the upholstery (36, 38, 40) from the backrest armature (17);
iii) fixing another upholstery (36, 38, 40) onto the backrest armature (17); and
iv) fixing first and second trim elements (50, 52), the first and second trim elements being preferably the same in steps i) and iv).
